# FASCICULE DE BREVET EUROPEEN

(11) **EP 3 840 312 B1**
(45) Date de publication et mention de la délivrance du brevet: **27.03.2024**
(21) Numéro de dépôt: 20214866.4
(22) Date de dépôt: 17.12.2020
(51) Int. Cl.: H04L 49/90

(54) **TRANSFERT DE DONNÉES VERS DES DISPOSITIFS DE STOCKAGE**
DATENÜBERTRAGUNG ZU SPEICHERGERÄTEN
DATA TRANSFER TOWARDS STORAGE DEVICES

(30) Priorité: 19.12.2019 FR 1914921
(43) Date de publication de la demande: 23.06.2021
(73) Titulaire: Softathome, 92700 Colombes (FR)
(72) Inventeur: ROYER, Nicolas, 75015 Paris (FR); MAKOWSKI, Wojciech, 78100 Saint-Germain-en-Laye (FR); IACOB, Mircea, 1080 Sint-Jans-Molenbeek (BE)
(74) Mandataire: Cabinet Beau de Loménie

(56) Documents cités:
- US-A1- 2004 058 651
- US-A1- 2011 238 771
- US-A1- 2016 128 043

## Description

### Domaine Technique

L'invention se rapporte au domaine des télécommunications et porte plus particulièrement sur l'échange de données entre des passerelles de communication connectées à un réseau de communication.

### Technique antérieure

L'invention trouve une application particulière, mais non limitative, dans la sauvegarde de données se trouvant dans un réseau local d'une passerelle de communication, cette sauvegarde visant à stocker de telles données dans des dispositifs de stockage distants afin de conserver une copie des données concernées.

Il existe aujourd'hui divers solutions pour sauvegarder des données, c'est-à-dire pour dupliquer et mettre en sécurité les données contenues dans un système informatique. La réalisation d'une sauvegarde (appelée aussi « backup » en anglais) permet de conserver une copie de données afin que l'on puisse si besoin récupérer ultérieurement ces données pour un usage quelconque. Effectuer une sauvegarde permet notamment de restaurer un système informatique (fichier, groupe de fichiers, système d'exploitation, données dans un fichier etc.) dans un état de fonctionnement donné, par exemple avant que se produise un évènement tel qu'un incident.

De façon connue, un utilisateur peut par exemple stocker ou sauvegarder ses données personnelles dans un support d'enregistrement personnel, tel qu'un disque dur externe ou une clé de stockage USB par exemple. De tels dispositifs de stockage de données sont fréquemment utilisés par les utilisateurs dans la sphère domestique pour conserver une copie de leurs données. Ce type de sauvegarde locale présente cependant un risque dans la mesure où toutes les données sont généralement centralisées dans le domicile de l'utilisateur ce qui peut conduire à la perte des données dans certaines situations (incendie, panne, perte, vol...).

Une technique de stockage plus récente consiste à sauvegarder des données en ligne, c'est-à-dire en se connectant à un site Internet, dit hébergeur, vers lequel on transfère ses données à sauvegarder. Ce type de sauvegarde à distance permet de minimiser les risques de perte de données puisque la sauvegarde est gérée à distance par un prestataire spécialisé. Il est possible d'accéder à distance à ses données depuis un quelconque terminal connecté au service de sauvegarde. Un inconvénient majeur du recours à cette technique est de laisser ses données, parfois sensibles, à disposition d'un tiers qui doit donc être de confiance. Or, les risques d'espionnage ou d'atteinte à la vie privée constituent une crainte grandissante chez les utilisateurs. Par ailleurs, malgré les techniques modernes de sécurisation de données, il existe toujours un risque que les données soient piratées, volées, dupliquées ou consultées sans le consentement du propriétaire légitime des données.

Des solutions de sauvegarde en mode « pair à pair » (P2P) se sont également développées ces dernières années. Cette technique s'appuie sur un service collaboratif où chaque participant protège à distance ses données sur l'espace de stockage d'un tiers. Cette technique permet notamment de minimiser les risques de pertes de données tout en limitant les risques d'utilisation des données par un tiers sans consentement préalable du propriétaire légitime.

La sauvegarde en ligne ou en mode pair à pair présente cependant des contraintes liées la capacité de l'utilisateur, à un instant donné, à transférer ses données vers l'extérieur, que ce soit vers un service de sauvegarde en ligne ou vers un tiers en mode P2P. En particulier, il peut s'avérer difficile de transférer des données vers un point de stockage distant, notamment lorsque le volume des données est important. Par ailleurs, la capacité des points de stockage n'est pas toujours adaptée au volume des données à sauvegarder, notamment lorsque ce volume est susceptible de varier dans le temps.

Il existe donc un besoin pour une solution de sauvegarde efficace permet notamment de répondre aux inconvénients exposés ci-dessus. US2004058651 divulgué l'optimisation d'un réseau sans fil en plaçant/téléchargeant des agents ou des applications d'optimisation dans chaque dispositif sans fil, qui transmet ensuite des données d'état du réseau à un serveur, éventuellement via un autre dispositif sans fil.

### Exposé de l'invention

L'invention est définie par les revendications indépendantes. Les modes de réalisation sont définis par les revendications dépendantes.

A cet effet, la présente invention concerne un premier procédé de communication mis en oeuvre par une première passerelle de communication configurée pour faire l'interface entre un dispositif de stockage local situé dans un premier réseau local et un réseau de communication, le procédé comprenant les étapes suivantes :
- réception d'une pluralité de paquets de données depuis ledit dispositif de stockage local dans lequel ladite pluralité de paquets de données est stockée ;
- transfert, par l'intermédiaire du réseau de communication, de la pluralité de paquets de données vers une pluralité de dispositifs de stockage distants de sorte que chaque paquet de données soit sauvegardé séparément par l'un desdits dispositifs de stockage distants, chaque dispositif de stockage distant étant accessible au travers d'une passerelle de communication distante faisant l'interface entre un réseau local distant, comprenant ledit dispositif de stockage distant, et le réseau de communication ;

le procédé comprenant l'étape suivante :
   - établissement d'une connexion sans fil entre la première passerelle de communication agissant en tant que client et une passerelle de communication voisine agissant en tant que point d'accès de la première passerelle de communication au réseau de communication ;
dans lequel, lors de l'étape de transfert, au moins un premier paquet de données, parmi ladite pluralité de paquets de données, est transféré à un premier dispositif de stockage distant via la connexion sans fil.

L'invention permet avantageusement d'améliorer la capacité de la première passerelle à transférer des données vers des dispositifs de stockage distants accessible via un réseau de communication. La première passerelle profite de la connexion des passerelles voisines au réseau de communication, et notamment en termes de bande-passante, pour faciliter le transfert des données via le réseau de communication en question.

De façon plus générale, l'invention permet avantageusement de sauvegarder des données à distances en stockant séparément diverses parties des données en question dans des dispositifs de stockage distincts, et ce en utilisant la technique pair à pair (P2P). Il est ainsi possible de réduire le risque de perte de données tout en évitant qu'un tiers ait en sa possession de façon centralisée toutes les données en question. De plus, on dispose ainsi d'une capacité de stockage appropriée en adaptant si besoin le nombre et la nature des points de stockage en fonction du volume des données à sauvegarder.

Selon un mode de réalisation particulier, la connexion sans fil est établie hors du réseau de communication.

Selon un mode de réalisation particulier, la passerelle de communication voisine fait l'interface entre le réseau de communication et un réseau local voisin.

Selon un mode de réalisation particulier, lors de l'étape d'établissement d'une connexion sans fil, la première passerelle de communication envoie une requête d'accès à la passerelle de communication voisine pour établir ladite connexion sans fil.

Selon un mode de réalisation particulier, le premier procédé comprend les étapes suivantes :
- obtention des capacités d'accès au réseau de communication d'au moins une passerelle de communication prédéterminée ; et
- sélection, en fonction des capacités d'accès, de ladite passerelle de communication voisine parmi ladite au moins une passerelle de communication prédéterminée.

Selon un mode de réalisation particulier, la connexion sans fil est de type Wifi.

Selon un mode de réalisation particulier, le premier procédé est tel que :
- la première passerelle de communication établit une communication sans fil avec une pluralité de passerelles de communication voisines pour établir une dite connexion sans fil entre la première passerelle de communication agissant en tant que client et chaque passerelle de communication voisine agissant pour la première passerelle de communication en tant que point d'accès au réseau de communication ; et
- lors de ladite étape de transfert, la première passerelle de communication transfert au moins une partie de la pluralité de paquets de données à des dispositifs de stockage distants via les connexions sans fil établies avec la pluralité de passerelles de communication voisines.

Dans un mode particulier de réalisation, les différentes étapes du premier procédé communication sont déterminées par des instructions de programmes d'ordinateurs.

En conséquence, l'invention vise aussi un programme d'ordinateur sur un support d'informations, ce programme étant susceptible d'être mis en oeuvre dans un dispositif tel qu'une passerelle de communication, ou plus généralement dans un ordinateur, ce programme comportant des instructions adaptées à la mise en oeuvre des étapes d'un premier procédé de communication tel que définis ci-dessus.

L'invention vise aussi un support d'enregistrement (ou support d'informations) lisible par un ordinateur, et comportant des instructions d'un programme d'ordinateur tel que mentionné ci-dessus.

L'invention concerne également un deuxième procédé de communication mis en oeuvre par une passerelle de communication, dite passerelle de communication voisine, configurée pour faire l'interface entre un réseau local et un réseau de communication, comprenant les étapes suivantes :
- établissement d'une connexion sans fil entre une première passerelle de communication agissant en tant que client et la passerelle de communication voisine agissant en tant que point d'accès de la première passerelle de communication au réseau de communication ;
- réception, en provenance de la première passerelle de communication via la connexion sans fil, d'un paquet de données stocké dans un dispositif de stockage local situé dans un réseau local, dit premier réseau local, de la première passerelle de communication ; et
- transfert du paquet de données à un dispositif de stockage distant via le réseau de communication.

Selon un mode de réalisation particulier, la connexion sans fil est établie hors du réseau de communication.

Selon un mode de réalisation particulier, la première passerelle de communication fait l'interface entre le réseau de communication et le premier réseau local dans lequel se situe le dispositif de stockage local.

Selon un mode de réalisation particulier, le deuxième procédé comprend une étape d'envoi, à la première passerelle de communication, de capacités d'accès de ladite passerelle de communication voisine à un réseau de communication.

Dans un mode particulier de réalisation, les différentes étapes du deuxième procédé communication sont déterminées par des instructions de programmes d'ordinateurs.

En conséquence, l'invention vise aussi un programme d'ordinateur sur un support d'informations, ce programme étant susceptible d'être mis en oeuvre dans un dispositif tel qu'une passerelle de communication, ou plus généralement dans un ordinateur, ce programme comportant des instructions adaptées à la mise en oeuvre des étapes d'un deuxième procédé de communication tel que définis ci-dessus.

L'invention vise aussi un support d'enregistrement (ou support d'informations) lisible par un ordinateur, et comportant des instructions d'un programme d'ordinateur tel que mentionné ci-dessus.

A noter que les programmes mentionnés dans le présent exposé peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

De plus, les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

L'invention vise aussi une première passerelle de communication configurée pour faire l'interface entre un dispositif de stockage local situé dans un premier réseau local et un réseau de communication, comprenant :
- un module de réception configuré pour recevoir une pluralité de paquets de données depuis ledit dispositif de stockage local dans lequel ladite pluralité de paquets de données est stockée ;
- un module de transfert configuré pour transférer, par l'intermédiaire du réseau de communication, la pluralité de paquets de données vers une pluralité de dispositifs de stockage distants de sorte que chaque paquet de données soit sauvegardé séparément par l'un desdits dispositifs de stockage distants, chaque dispositif de stockage distant étant accessible au travers d'une passerelle de communication distante faisant l'interface entre un réseau local distant, comprenant ledit dispositif de stockage distant, et le réseau de communication ;
la première passerelle de communication comprenant :
- un module de connexion configuré pour établir une connexion sans fil entre la première passerelle de communication agissant en tant que client et une passerelle de communication voisine agissant en tant que point d'accès de la première passerelle de communication au réseau de communication ; dans lequel le module de transfert est configuré pour qu'au moins un premier paquet de données, parmi ladite pluralité de paquets de données, soit transféré à un premier dispositif de stockage distant via la connexion sans fil.

L'invention vise en outre une deuxième passerelle de communication, dite « passerelle de communication voisine », configurée pour entre un réseau local et un réseau de communication, comprenant :
- un module de connexion configuré pour établir une connexion sans fil entre une première passerelle de communication agissant en tant que client et la passerelle de communication voisine agissant en tant que point d'accès de la première passerelle de communication au réseau de communication ;
- un module de réception configuré pour recevoir, en provenance de la première passerelle de communication via la connexion sans fil, un paquet de données stockés dans un dispositif de stockage local situé dans un réseau local, dit premier réseau local, de la première passerelle de communication ; et
- un module de transfert configuré pour transférer le paquet de données à un dispositif de stockage distant via le réseau de communication.

A noter que les différents modes de réalisation définis ci-avant en relation avec les premier et deuxième procédés de communication s'appliquent par analogie aux passerelles de communication définies ci-dessus.

Selon un mode de réalisation, l'invention est mise en oeuvre au moyen de composants logiciels et/ou matériels. Dans cette optique, le terme « module » peut correspondre dans ce document aussi bien à un composant logiciel, qu'à un composant matériel ou à un ensemble de composants matériels et logiciels.

Pour chaque étape des premier et deuxième procédés de l'invention, les passerelles de communication de l'invention peuvent comprendre un module correspondant configuré pour réaliser ladite étape.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures:
[Fig. 1] La figure 1 représente schématiquement un environnement comprenant des passerelles de communication faisant l'interface entre des réseaux locaux respectifs et un réseau de communication, conformément à un mode de réalisation particulier de l'invention ;
[Fig. 2] La figure 2 représente schématiquement un ensemble de modules mis en oeuvre par une première passerelle de communication, conformément à un mode de réalisation particulier de l'invention ;
[Fig. 3] La figure 3 représente schématiquement un ensemble de modules mis en oeuvre par une deuxième passerelle de communication, conformément à un mode de réalisation particulier de l'invention ; et
[Fig. 4] La figure 4 représente, sous forme d'un diagramme, les étapes de procédés de communication mis en oeuvre par des passerelles de communication, conformément à un mode de réalisation particulier de l'invention.

### Description des modes de réalisation

Comme indiqué ci-avant, l'invention porte sur l'échange de données entre des passerelles de communication connectées à un réseau de communication et concerne plus particulièrement, mais de façon non limitative, la sauvegarde de données se trouvant dans un réseau local d'une passerelle de communication.

Comme indiquer ci-avant, une sauvegarde de données consiste à dupliquer et mettre en sécurité les données contenues dans un système informatique. La réalisation d'une sauvegarde (appelée aussi « backup » en anglais) permet de conserver une copie de données afin que l'on puisse si besoin récupérer ultérieurement ces données pour un usage quelconque. Effectuer une sauvegarde permet notamment de restaurer un système informatique (fichier, groupe de fichiers, système d'exploitation, données dans un fichier etc.) dans un état de fonctionnement donné, par exemple avant que se produise un évènement tel qu'un incident.

Une application plus générale de l'invention vise à stocker à distance des données contenues dans un réseau local d'une passerelle de communication.

Dans ce document, une passerelle de communication (appelé aussi « passerelle », ou encore « gateway » an anglais) désigne un dispositif, tel qu'un modem ou un routeur par exemple, configuré pour faire l'interface entre deux réseaux de communication distincts, de sorte à relier par exemple un réseau local et un réseau de communication distant (Internet par exemple). Une passerelle assure le routage des données échangées entre les deux réseaux en question et peut également mettre en oeuvre diverses fonctions associées, tels que des fonctions de pare-feu, de proxy etc.

Afin notamment de palier les inconvénients et insuffisances exposées ci-avant, l'invention se propose de permettre à une première passerelle de coopérer via une connexion sans fil avec au moins une deuxième passerelle de communication, voisine de ladite première passerelle, de sorte à ce que la ou les deuxièmes passerelles servent de points d'accès pour accéder à un réseau de communication distant (Internet par exemple). La première passerelle peut ainsi transférer, via la deuxième passerelle agissant en tant que point d'accès, des données de son réseau local afin que celles-ci soient sauvegardées (ou stockées) dans au moins un dispositif de stockage distant accessible via le réseau de communication distant. Selon certaines variantes, des paquets de données à sauvegarder sont transférés par la première passerelle, via des passerelles voisines, vers une pluralité de dispositifs de stockage distants de sorte que chaque paquet de données soit sauvegardé séparément par l'un desdits dispositifs de stockage distinct.

La ou les deuxièmes passerelles assurent ainsi le transite des données entre la première passerelle et le réseau distant afin de permettre un transfert des données vers un ou des dispositifs de stockage distants.

L'invention concerne la première passerelle et la ou les deuxièmes passerelles voisines telles qu'exposées ci-dessus et vise en outre les procédés de communication mis en oeuvre respectivement par ces passerelles pour permettre un transfert de données depuis la première passerelle vers le ou les dispositifs de stockage distants.

D'autres aspects et avantages de la présente invention ressortiront des exemples de réalisation décrits ci-dessous en référence aux dessins mentionnés ci-avant.

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

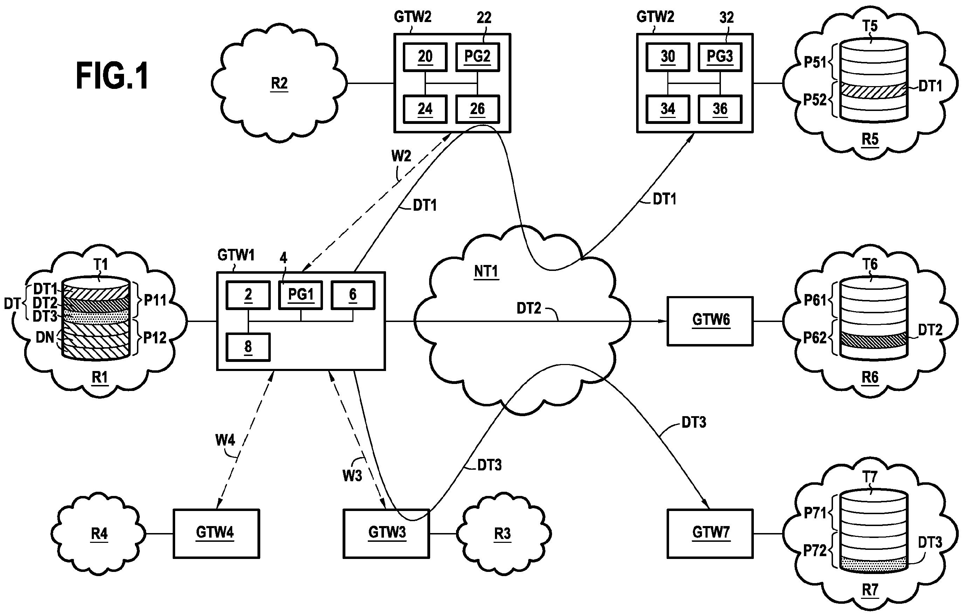

La **figure 1** représente, de manière schématique, un environnement E comprenant un ensemble de passerelles de communication selon un mode de réalisation de l'invention. Plus particulièrement, cet environnement E comprend une première passerelle GTW1 et des passerelles GTW2, GTW3 et GTW4 voisines de la première passerelle GTW1. L'environnement E comporte en outre des passerelles distantes GTW5, GTW6 et GTW7.

Les passerelles GTW1-GTW7 sont chacune aptes à établir une liaison de communication avec un réseau de communication NT1 pour échanger des données.

Les passerelles GTW2, GTW3 et GTW4 sont dites « passerelles voisines » dans le sens où elles sont suffisamment proches de la première passerelle GTW1 pour pouvoir communiquer avec cette dernière via une connexion (ou liaison de communication) sans fil. On suppose par exemple ici que la passerelle GTW1 est configurée pour communiquer avec les passerelles voisines GTW2, GTW3 et GTW4 via une connexion sans fil W2, W3 et W4 respectivement. Les connexions sans fil W2, W3 et W4 sont établies hors du réseau de communication NT1 (autrement dit, les connexions sans fil W2-W4 sont distinctes du réseau de communication NT1). Les connexions sans fil W2-W4 sont dans cet exemple de type Wifi, bien que d'autres types de connexion sans fil soient possibles (par exemple de type Wifi, Bluetooth° ou équivalent).

L'établissement de ces connexions sans fil W2-W4 est ici possible car les passerelles GTW2-GTW4 sont situées dans le voisinage de la passerelle GTW1, c'est-à-dire à portée de communication de la passerelle GTW1. Chaque passerelle GTW1-GTW4 est par exemple positionnée dans un lieu distinct (une maison, une école, un lieu de travail...), ces lieux étant situés à proximité les uns des autres. Comme expliqué par la suite, ces connexions sans fil W2-W4 permettent aux passerelles GTW1-GTW4 de coopérer entre elles pour mettre en oeuvre l'invention selon divers modes de réalisation.

D'autre part, les passerelles GTW5-GTW7 sont dites « passerelles distantes » dans le sens où elles sont situées trop loin de la première passerelle GTW1 pour pouvoir communiquer avec cette dernière via une connexion sans fil analogue aux connexions W2-W4 décrites ci-dessus. Ainsi, la première passerelle GTW1 n'est pas en capacité d'établir une connexion sans fil - hors du réseau NT1 - entre ladite première passerelle GTW1 et chacune des passerelles distantes GTW5-GTW7.

Par ailleurs, chacune des passerelles GTW1-GTW7 est configurée pour faire l'interface entre un réseau local respectif R1-R7 d'une part, et le réseau de communication distant NT1 d'autre part. Dans cet exemple, les passerelles GTW1-GTW7 servent chacune de point d'accès, pour leur réseau local respectif R1-R7, au réseau de communication NT1. Ainsi, dans cet exemple particulier, les passerelles voisines GTW2, GTW3 et GTW4 font respectivement l'interface entre respectivement un réseau local voisin R2, R3 et R4 d'une part, et le réseau de communication NT1 d'autre part. De même, les passerelles distantes GTW5, GTW6 et GTW7 font respectivement l'interface entre un réseau local distant R5, R6 et R7 d'une part, et le réseau de communication NT1 d'autre part.

On suppose ici que les passerelles GTW1-GTW7 sont reliées à leur réseau local respectif R1-R7 par une liaison de communication sans fil, de type Wifi par exemple, et/ou filaire. On comprend que des liaisons de communication, autres que de type Wifi, sont toutefois possibles telles qu'une liaison de type liaison filaire, courants porteurs en ligne, Bluetooth^{®} ou équivalent.

On suppose par ailleurs que le réseau de communication NT1 est un réseau Internet, d'autres types de réseau étant toutefois possibles.

Chaque réseau local R1-R7 peut comporter au moins un terminal quelconque agissant en tant que client du point de vue de la passerelle GTW1-GTW7 associée.

Dans l'exemple considéré ici, le réseau local R1 comporte un dispositif de stockage T1 configuré pour stocker des données DT. La structure et l'agencement des données DT peuvent varier selon le cas. Dans l'exemple représenté en **figure 1****,** les données DT sont composées de trois paquets de données DT1, DT2 et DT3. Comme expliqué par la suite, l'invention vise dans cet exemple à sauvegarder les données DT dans au moins un dispositif de stockage distant du réseau local R1.

Par ailleurs, les réseaux locaux R5, R6 et R7 comportent respectivement un dispositif de stockage T5, T6 et T7 analogue au dispositif de stockage T1. Comme expliqué par la suite, les dispositifs de stockage T5-T7 sont configurés pour sauvegarder (ou stocker) des données contenues dans le dispositif de stockage T1, telles que les données respectives DT1-DT3 dans l'exemple représenté en **figure 1****.**

Ainsi, chaque dispositif de stockage distant T5, T6 et T7 est respectivement accessible au travers d'une passerelle de communication distante GTW5, GTW6 et GTW7 faisant l'interface entre un réseau local distant (R5, R6, R7), comprenant ledit dispositif de stockage distant, et le réseau de communication NT1.

Chacun des dispositifs de stockage T1 et T5-T7 peut être un quelconque dispositif capable de stocker en mémoire des données (ou base de données ou autre). Il peut s'agir, par exemple, d'un dispositif comportant au moins un disque dur ou moyen d'enregistrement magnétique. Il peut s'agir d'un périphérique de stockage indépendant ou d'une mémoire locale dans un terminal.

Selon un exemple particulier illustré en **figure 1****,** le dispositif de stockage T1 peut comporter une première zone mémoire P11 destinée à stocker les données personnelles DT d'un utilisateur de la première passerelle GTW1, et une deuxième zone mémoire P12 destinée à stocker d'autres données DN provenant de tiers, tels que des utilisateurs d'au moins l'une des passerelles GTW2-GTW7. De manière analogue, les dispositifs de stockage distants T5, T6 et T7 comportent chacun :
- une zone mémoire notée respectivement P51, P61 et P71, destinée à stocker des données personnelles d'un utilisateur de la passerelle concernée ; et
- une zone mémoire notée respectivement P52, P62 et P72, destinée à stocker des données de tiers telles que par exemple les données DT de l'utilisateur de la première passerelle GTW1.

On comprend que la structure des dispositifs de stockage T1 et T5-T7, ainsi que la manière dont les données sont stockées dans ces dispositifs de stockage peuvent varier selon le cas.

Comme représenté en **figure 1****,** la première passerelle GTW1 est configurée pour recevoir depuis le dispositif de stockage T1 les données DT sous forme de paquets DT1-DT3, et pour causer le transfert de ces données DT, par l'intermédiaire du réseau NT1, aux dispositifs de stockage distants T5, T6 et T7, de sorte que chaque paquet de données DT1-DT3 soit sauvegardé (ou stocké) séparément par l'un desdits dispositifs de stockage. Comme expliqué ci-après, chaque paquet de données DT1-DT3 provenant de la première passerelle GTW1 peut transiter par l'une des passerelles voisines GTW2-GTW4 ou être envoyé directement par la première passerelle GTW1 au réseau NT1 à destination d'un dispositif de stockage respectif T5-T7.

Plus particulièrement, comme décrit par la suite, la première passerelle GTW1 est ici configurée pour transférer le paquet de données DT1 à la passerelle voisine GTW2 afin que cette dernière envoie, via le réseau NT1, le paquet DT1 à la passerelle distante GTW5 en vue d'être sauvegardé par le dispositif de stockage distant T5. De même, la première passerelle GTW1 est ici configurée pour transférer le paquet de données DT3 à la passerelle voisine GTW3 afin que cette dernière envoie, via le réseau NT1, le paquet DT3 à la passerelle distante GTW7 en vue d'être sauvegardé par le dispositif de stockage distant T7. Les passerelles voisines GTW2-GTW3, coopérant chacune avec la première passerelle GTW1 via une connexion sans fil respective W2-W3, agissent ainsi en tant que point d'accès au réseau NT1 à l'égard de la première passerelle GTW1. En outre, la première passerelle GTW1 est ici configurée pour envoyer directement le paquet de données DT2 à la passerelle distante GTW6 via le réseau NT1, c'est-à-dire sans utiliser une passerelle voisine comme point d'accès au réseau NT1, en vue de sauvegarder le paquet DT2 dans le dispositif de stockage T6. On comprend qu'il s'agit ici uniquement d'un exemple de réalisation non limitatif, le nombre et la nature des dispositifs de stockage distants utilisés pour sauvegarder les données DT pouvant notamment varier selon le cas.

Selon une variante, tous les paquets formant les données DT transitent par l'une au moins des passerelles voisines GTW2-GTW4 pour atteindre les dispositifs de stockage distants. Selon une variante, une seule passerelle voisine est utilisée pour transférer les données DT vers un ou des dispositifs de stockage distants. Selon une variante, un seul dispositif de stockage distant est utilisé pour sauvegarder toutes les données DT en question.

Le nombre de passerelles voisines utilisées pour transférer des paquets de données depuis la première passerelle GTW1 peut aussi varier selon le cas. Une seule passerelle voisine ou une pluralité d'entre elles peuvent être utilisées pour le transfert des paquets de données depuis la première passerelle GTW1 vers un ou plusieurs parmi les dispositifs de stockage T5-T7.

La **figure 1** représente en outre schématiquement la structure de la première passerelle GTW1, conformément à un mode de réalisation particulier.

Plus précisément, la première passerelle GTW1 comprend dans cet exemple au moins un processeur 2, une mémoire non volatile 4, une première interface de communication 6 et une deuxième interface de communication 8.

La mémoire 4 est une mémoire non volatile réinscriptible (Flash ou EEPROM par exemple) ou une mémoire morte (ROM), cette mémoire constituant un support d'enregistrement (ou support d'informations) conforme à un mode de réalisation particulier, lisible par la passerelle GTW1, et sur lequel est enregistré un programme d'ordinateur PG1 conforme à un mode de réalisation particulier. Ce programme d'ordinateur PG1 comporte des instructions pour l'exécution des étapes d'un premier procédé de communication selon un mode de réalisation particulier.

La première interface de communication 6 est configurée pour assurer l'interface via une connexion sans fil avec le réseau local R1. Dans cet exemple, la passerelle GTW1 utilise cette première interface de communication 6 pour communiquer via une connexion sans fil de type Wifi avec le terminal T1 du réseau local R1.

La deuxième interface de communication 8 est configurée pour assurer l'interface avec le réseau de communication NT1. La passerelle GTW1 utilise ici cette deuxième interface 8 pour communiquer via une quelconque connexion (filaire par exemple, ADSL ou autre) avec le serveur distant SV du réseau distant NT1.

La **figure 1** représente également schématiquement la structure de la passerelle voisine (dite aussi « deuxième passerelle ») GTW2, conformément à un mode de réalisation particulier. La passerelle voisine GTW2 présente ici une structure analogue à la structure de la première passerelle GTW1 décrite ci-avant.

Plus précisément, la passerelle GTW2 comprend dans cet exemple au moins un processeur 20, une mémoire non volatile 22, une première interface de communication 24 et une deuxième interface de communication 26.

La mémoire 22 est une mémoire non volatile réinscriptible (Flash ou EEPROM par exemple) ou une mémoire morte (ROM), cette mémoire constituant un support d'enregistrement (ou support d'informations) conforme à un mode de réalisation particulier, lisible par la passerelle GTW2, et sur lequel est enregistré un programme d'ordinateur PG2 conforme à un mode de réalisation particulier. Ce programme d'ordinateur PG2 comporte des instructions pour l'exécution des étapes d'un deuxième procédé de communication selon un mode de réalisation particulier.

La première interface de communication 24 est configurée pour assurer l'interface via une connexion sans fil avec le réseau local R2. Dans cet exemple, la passerelle GTW2 peut utiliser cette première interface de communication 24 pour communiquer via une connexion sans fil de type Wifi avec un terminal quelconque (non représenté) du réseau local R2.

La deuxième interface de communication 26 est configurée pour assurer l'interface avec le réseau de communication distant NT1. La passerelle GTW2 utilise ici cette deuxième interface 26 pour communiquer via une quelconque connexion (filaire par exemple, ADSL ou autre) avec le serveur distant SV du réseau distant NT1.

Les autres passerelles voisines GTW3 et GTW4 présentent une structure analogue à celle de la passerelle GTW2, et ne seront par conséquent pas décrites plus détail dans ce document.

De même, les passerelles distantes GTW5-GTW7 présentent une structure analogue à celle des passerelles GTW1-GTW4. Comme illustré en **figure 1****,** la passerelle distante GTW5 comprend par exemple au moins un processeur 30, une mémoire non volatile 32 dans lequel est stocké un programme d'ordinateur PG3, une première interface de communication 34 et une deuxième interface de communication 36.

La première interface de communication 34 est configurée pour assurer l'interface via une connexion sans fil avec le réseau local R5. Dans cet exemple, la passerelle distante GTW5 peut utiliser cette première interface de communication 34 pour communiquer via une connexion sans fil de type Wifi avec le dispositif de stockage DT1 situé dans le réseau local R5.

La deuxième interface de communication 36 est configurée pour assurer l'interface avec le réseau de communication distant NT1 via une quelconque connexion (filaire par exemple, ADSL ou autre).

Les autres passerelles distantes GTW6 et GTW7 présentent une structure analogue à celle de la passerelle distante GTW5, et ne seront par conséquent pas décrites plus détail dans ce document.

On comprend ici que certains éléments généralement présents notamment dans une passerelle de communication ont été volontairement omis car ils ne sont pas nécessaires à la compréhension de la présente invention. On comprendra par ailleurs que les passerelles GTW1-GTW7 représentées en **figure 1** ne constituent qu'un exemple de réalisation particulier, d'autres mises en oeuvre étant possibles dans le cadre de l'invention. L'homme du métier comprend en particulier que certains éléments parmi les passerelles GTW1-GTW7 et les dispositifs de stockage T1 et T5-T7 ne sont décrits ici que pour faciliter la compréhension de l'invention, ces éléments n'étant pas nécessaires pour mettre en oeuvre l'invention.

Selon une variante de réalisation, la passerelle GTW5 n'est pas utilisée dans l'environnement E représenté en **figure 1** pour faire l'interface entre le dispositif de stockage T5 et le réseau de communication NT1. Dans ce cas, le dispositif de stockage T5 peut communiquer directement avec le réseau de communication NT1, via éventuellement tout équipement approprié (serveur...), pour recevoir le paquet de données DT1 émis par la passerelle voisine GTW2 via le réseau NT1. Selon une autre variante, le dispositif de stockage T5 forme avec la passerelle distante GTW5 un seul et même dispositif de stockage apte à recevoir le paquet de données DT1 émis par la passerelle voisine GTW2 via le réseau NT1. Ces variantes s'appliquent de façon analogue aux dispositifs de stockage T6 et T7 et à leur passerelle associée.

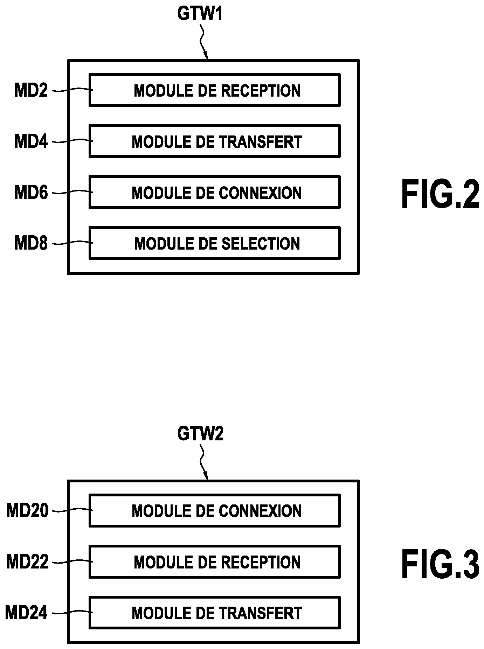

Comme représenté en **figure 2** dans un mode de réalisation particulier, le processeur 2 de la première passerelle GTW1 piloté par le programme d'ordinateur PG1 met ici en oeuvre un certain nombre de modules, à savoir : un module de réception MD2, un module de transfert MD4 et un module de connexion MD6. Selon une variante, le processeur 2 met également en oeuvre un module de sélection MD8.

Le module de réception MD2 est configuré pour recevoir la pluralité de paquets de données DT1-DT3 depuis le dispositif de stockage local T1 dans lequel la pluralité de paquets de données DT1-DT3 est stockée.

Le module de transfert MD4 est configuré pour causer le transfert, par l'intermédiaire du réseau de communication NT1, de la pluralité de paquets de données DT1-DT3 vers la pluralité de dispositifs de stockage distants GTW5-GTW7 de sorte que chaque paquet de données DT1-DT3 soit sauvegardé séparément par l'un desdits dispositifs de stockage distants GTW5-GTW7.

Le module de connexion MD6 est configuré pour établir une connexion sans fil, hors du réseau de communication NT1, entre la première passerelle de communication GTW1 agissant en tant que client et une passerelle de communication voisine (GTW2 par exemple) agissant en tant que point d'accès de la première passerelle GTW1 au réseau de communication NT1. Dans l'exemple décrit ci-après, la première passerelle GTW1 établit en particulier de telles connexions sans fil W2 et W3 avec respectivement les passerelles voisines GTW2 et GTW3.

Selon un mode de réalisation particulier, le module de transfert MD4 est configuré pour qu'au moins un premier paquet de données (DT1 et DT3 par exemple), parmi ladite pluralité de paquets de données DT1-DT3, soit transféré à un dispositif de stockage distant (T5 et T7 respectivement) via une connexion sans fil (W2 et W3 respectivement) établie par le module de connexion MD6, comme décrit ci-avant. Comme expliqué par la suite, ces paquets de données DT1 et DT3 transitent respectivement par les passerelles voisines GTW2 et GTW3 pour atteindre les passerelles distantes GTW5 et GTW7, ce qui permet de faciliter le transfert des paquets DT1 et DT3 en vue de leur sauvegarde dans les dispositifs de stockage distants T5 et T7.

Selon un exemple particulier, le module de transfert MD4 est en outre configuré pour transférer au moins un paquet de données, en l'occurrence DT1, directement à la passerelle distante GTW6 via le réseau de communication NT1, c'est-à-dire sans utiliser une passerelle voisine GTW2-GTW4 comme point d'accès de la première passerelle GTW1 au réseau NT1. On comprend que le choix de faire transiter ou non un paquet de données déterminé par une passerelle voisine de la première passerelle GTW1 peut être adapté selon le cas.

Comme représenté en **figure 3** dans un mode de réalisation particulier, le processeur 20 de la passerelle voisine GTW2 piloté par le programme d'ordinateur PG2 met ici en oeuvre un certain nombre de modules, à savoir : un module de connexion MD20, un module de réception MD22 et un module de transfert MD24.

Le module de connexion MD20 est configuré pour établir une connexion sans fil W2 **(****figure 1**) - hors du réseau de communication NT1 - entre la première passerelle de communication GTW1 agissant alors en tant que client et la passerelle de communication voisine GTW2 agissant en tant que point d'accès de la première passerelle GTW1 au réseau de communication NT1.

Le module de réception MD22 est configuré pour recevoir, en provenance de la première passerelle de communication GTW1 via la connexion sans fil, un paquet de données DT1 contenu dans le dispositif de stockage local T1 situé dans le réseau local R1 de la première passerelle de communication GTW1.

Le module de transfert MD24 est configuré pour transférer le paquet de données DT1, reçu par le module de réception MD22, au dispositif de stockage distant T5 via le réseau de communication NT1.

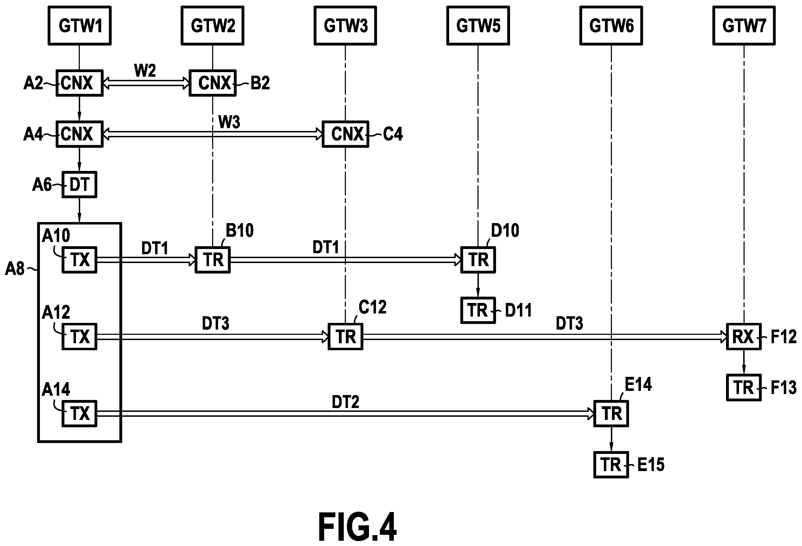

Le fonctionnement des modules MD2-MD8 de la première passerelle GTW1 et des modules MD20-MD24 de la deuxième passerelle GTW2 apparaîtra plus précisément dans les exemples de réalisation décrits ci-après en référence notamment à la **figure 4****.** On comprend que les modules MD2-MD10 et MD20-MD24 tels que décrits ci-dessus ne constituent qu'un exemple de mise en oeuvre non limitatif de l'invention.

Un mode de réalisation particulier est à présent décrit en référence à la **figure 4****.** Plus précisément, la première passerelle GTW1 met en oeuvre un premier procédé de communication selon un mode de réalisation particulier, en exécutant le programme PG1. De même, la deuxième passerelle GTW2 met en oeuvre un deuxième procédé de communication selon un mode de réalisation particulier, en exécutant le programme PG2.

Comme illustré en **figure 1****,** on suppose ici que le dispositif de stockage T1 du réseau local R1 contient des données DT que l'on souhaite sauvegarder à distance. Pour ce faire, les données DT sont ici divisées en paquets de données DT1-DT3 en vue d'être transférés vers les dispositifs de stockage respectifs T5-T7. La manière dont la séparation des données DT en paquets est effectuée (nombre, nature des données...) peut varier selon le cas. Selon un exemple particulier, c'est le dispositif de stockage T1 qui procède à la division des données DT en paquets distincts DT1, DT2 et DT3. Chaque paquet présente par exemple une taille inférieure ou égale à une valeur seuil prédéfinie afin qu'il soit possible de stocker facilement ces paquets dans divers dispositifs de stockage distants.

Comme illustré en **figure 4****,** au cours d'une étape de connexion A2, la première passerelle GTW1 établit une connexion sans fil W2 (de type Wifi par exemple) entre ladite première passerelle GTW1 agissant en tant que client (ou dispositif client) et la passerelle voisine GTW2 agissant en tant que point d'accès de la première passerelle GTW1 au réseau de communication NT1. Cette connexion sans fil W2 est établie hors du réseau de communication NT1. La passerelle voisine GTW2 se trouvant dans le voisinage de la première passerelle GTW1, elle coopère (B2) avec cette dernière pour établir la connexion sans fil W2. Pour ce faire, la première passerelle GTW1 envoie par exemple à la deuxième passerelle GTW2 une requête d'accès (non représentée) visant à établir la connexion sans fil W2. En réponse à cette requête d'accès, la deuxième passerelle GTW2 agit alors en tant que point d'accès au réseau de communication NT1 pour la première passerelle GTW1.

Au cours d'une étape de connexion A4 analogue à l'étape de connexion A2 décrite ci-dessus, la première passerelle GTW1 établit également une connexion sans fil W3 (de type Wifi par exemple) entre ladite première passerelle GTW1 agissant en tant que client (ou dispositif client) et la passerelle voisine GTW3 agissant en tant que point d'accès de la première passerelle GTW1 au réseau de communication NT1. Cette connexion sans fil W2 est également établie hors du réseau de communication NT1. La passerelle voisine GTW3 se trouvant dans le voisinage de la première passerelle GTW1, elle coopère (B2) avec cette dernière pour établir la connexion sans fil W3, de façon analogue à ce qui est décrit ci-dessus pour l'établissement de la connexion sans fil W2.

Au cours d'une étape de réception A6, la première passerelle GTW1 reçoit les données DT transmises par le dispositif de stockage T1, ces données DT comportant les paquets de données DT1, DT2 et DT3 comme déjà décrit ci-avant. Bien que la réception A6 n'intervienne ici qu'après l'établissement A2, A4 des connexions sans fil W2, W3, on notera que l'ordre dans lequel les étapes A2, A4 et A6 est réalisé peut varier selon le cas.

Au cours d'une étape de transfert A8, la première passerelle GTW1 déclenche ensuite le transfert, par l'intermédiaire du réseau de communication NT1, de chacun des paquets de données DT1-DT3 vers les dispositifs de stockage T5-T7, de sorte que chaque paquet de données DT1-DT3 soit sauvegardé (ou stocké) séparément par l'un des dispositifs de stockage distants T5-T7.

Plus particulièrement, lors du transfert A8, la première passerelle GTW1 envoie (A10), via la connexion sans fil W2 (donc sans passer par le réseau NT1), le paquet de données DT1 à la passerelle voisine GTW2 à destination du dispositif de stockage distant T5. Pour ce faire, la première passerelle GTW1 fournit par exemple à la passerelle voisine GTW2 une adresse IP de la passerelle distante GTW5 ainsi qu'un numéro de port du dispositif de stockage T5. La passerelle voisine GTW2 sert ici de point d'accès à la première passerelle GTW1 pour transférer (B10), par l'intermédiaire du réseau de communication NT1, le paquet de données DT1 à la passerelle distante GTW5. Lors d'une étape de réception D10, la passerelle distante GTW5 reçoit le paquet de données DT1 destiné au dispositif de stockage T5 et transfert (D11) le paquet DT1 audit dispositif de stockage T6 en vue d'être sauvegardé. Dans l'exemple illustré en **figure 1****,** le dispositif de stockage T5 sauvegarde (ou stocke) le paquet DT1 dans sa zone mémoire P52 dédiée aux données des tiers (c'est-à-dire les données venant de l'extérieur du réseau local R5).

Toujours lors du transfert A8, de façon analogue à l'étape A10 décrite ci-avant, la première passerelle GTW1 envoie (A12) aussi, via la connexion sans fil W3 (donc sans passer par le réseau NT1), le paquet de données DT3 à la passerelle voisine GTW3 à destination du dispositif de stockage distant T7. Pour ce faire, la première passerelle GTW1 fournit par exemple à la passerelle voisine GTW3 une adresse IP de la passerelle distante GTW7 ainsi qu'un numéro de port du dispositif de stockage T7. La passerelle voisine GTW3 sert ici de point d'accès à la première passerelle GTW1 pour transférer (C12), par l'intermédiaire du réseau de communication NT1, le paquet de données DT3 à la passerelle distante GTW7. Lors d'une étape de réception F12, la passerelle distante GTW7 reçoit le paquet de données DT3 destiné au dispositif de stockage T7 et transfert (F13) le paquet DT3 audit dispositif de stockage T7 en vue d'être sauvegardé. Dans l'exemple illustré en **figure 1****,** le dispositif de stockage T7 sauvegarde (ou stocke) le paquet DT3 dans sa zone mémoire P72 dédiée aux données des tiers (c'est-à-dire les données venant de l'extérieur du réseau local R7).

En outre, lors du transfert A8, la première passerelle GTW1 envoie (A14) directement le paquet de données DT2 à la passerelle distante GTW6 via le réseau NT1, c'est-à-dire sans utiliser une passerelle voisine GTW2-GTW4 comme point d'accès au réseau NT1, en vue de sauvegarder le paquet DT2 dans le dispositif de stockage T6. Lors d'une étape de réception E14, la passerelle distante GTW6 reçoit le paquet de données DT2 destiné au dispositif de stockage T6 et transfert (E15) le paquet DT2 audit dispositif de stockage T6 en vue d'être sauvegardé. Dans l'exemple illustré en **figure 1****,** le dispositif de stockage T6 sauvegarde (ou stocke) le paquet DT2 dans sa zone mémoire P62 dédiée aux données des tiers (c'est-à-dire les données venant de l'extérieur du réseau local R6). Des variantes sont toutefois possibles selon lesquelles la première passerelle GTW1 n'envoie pas de données DT directement à un dispositif de stockage distant (c'est-à-dire sans passer par une passerelle voisine).

En définitive, les passerelles voisines GTW2-GTW3, coopérant chacune avec la première passerelle GTW1 via une connexion sans fil respective W2-W3, agissent dans cet exemple en tant que point d'accès au réseau NT1 à l'égard de la première passerelle GTW1 pour permettre le transfert de données à sauvegarder DT1, DT3 vers des dispositifs de stockage distants T5, T7. Dans cet exemple, la passerelle voisine GTW4 n'est pas utilisée par la première passerelle GTW1 en tant que point d'accès lors du transfert A8, bien que cela soit possible.

L'invention permet ici avantageusement d'améliorer la capacité de la première passerelle GTW1 à transférer des données DT vers des dispositifs de stockage distants accessible via un réseau de communication NT1. La première passerelle GTW1 profite de la connexion des passerelles voisines GTW2 et GTW3 au réseau NT1, et notamment de leur bande-passante, pour faciliter le transfert des données DT via le réseau NT1. La première passerelle GTW1 peut envoyer simultanément des paquets de données via plusieurs passerelles voisines distinctes.

Dans un cas où la première passerelle GTW1 ne dispose par exemple que d'une mauvaise connexion ou d'aucune connexion avec le réseau de communication NT1, elle peut faire appel à au moins une autre passerelle voisine avec laquelle elle communique via une connexion sans fil pour faire transiter des données que l'on souhaite sauvegarder. Grâce à l'invention, une passerelle peut ainsi jouer son rôle traditionnel de point d'accès pour un réseau local et aussi devenir un client, de type Wifi par exemple, vis-à-vis d'une autre passerelle.

De cette manière, les temps de transfert peuvent être réduits et la qualité du transfert peut être optimisée. L'invention peut permettre par exemple de doubler la bande passante (montante) de l'accès d'une passerelle à un réseau de communication, ce qui permet notamment d'accélérer un processus de sauvegarde à distance.

Par ailleurs, lorsqu'une passerelle perd son accès direct à un réseau de communication, elle peut palier à ce problème en utilisant une passerelle tierce comme point d'accès, ce qui permet de sécuriser l'accès audit réseau. Une telle sécurisation est notamment avantageuse pour la mise en oeuvre de services de sauvegarde de données.

La présente invention permet ainsi d'améliorer de manière significative la sauvegarde de données à distance d'une passerelle de communication, sans que cela nécessite la mise en oeuvre de nouvelles infrastructures. On peut avantageusement tirer profit d'un réseau existant de passerelles de communication connectées entre elles via des liaisons sans fil dans un espace donné pour améliorer l'accès de chaque passerelle à un réseau distant et ainsi faciliter la mise en oeuvre d'un service de sauvegarde de données.

De façon plus générale, l'invention permet avantageusement de sauvegarder des données à distances en stockant séparément diverses parties des données en question dans des dispositifs de stockage distincts, et ce en utilisant la technique pair à pair (P2P). Il est ainsi possible de réduire le risque de perte de données tout en évitant qu'un tiers ait en sa possession de façon centralisée toutes les données en question. De plus, on dispose ainsi d'une capacité de stockage appropriée en adaptant si besoin le nombre et la nature des points de stockage en fonction du volume des données à sauvegarder.

Grâce à l'invention, une pluralité d'utilisateurs peut collaborer ensemble en mode pair à pair pour stocker à distance les données de chaque utilisateur. Les utilisateurs peuvent disposer sur un dispositif de stockage local d'un espace mémoire dédiée au stockage des données de tiers. La sauvegarde de données est ainsi distribuée à travers le réseau.

Dans l'exemple de réalisation représenté en **figure 4****,** le nombre de passerelles voisines utilisées par la première passerelle GTW1 en tant que point d'accès au réseau NT1 peut varier selon le cas, en fonction par exemple du volume des données DT à sauvegarder. La taille de chaque paquet DT1-DT3 peut en outre être adaptée en fonction de la capacité de stockage de chaque dispositif de stockage utilisé.

Selon une variante de réalisation, tous les paquets de données DT sont transférés par la première passerelle GTW1 en A8 via une ou des passerelles voisines (GTW2-GTW4) fonctionnant en tant que point d'accès au réseau NT1. Dans un exemple particulier, une seule passerelle voisine est utilisée par la première passerelle GTW1, en tant que point d'accès au réseau NT1, pour transférer des données DT. Dans ce dernier cas, il n'est pas nécessaire de diviser les données DT en une pluralité de paquets DT1-DT3.

Selon un exemple particulier, la première passerelle GTW1 peut également fonctionner de façon analogue aux passerelles distantes GTW5-GTW7. La première passerelle GTW1 est par exemple configurée pour recevoir et transférer au dispositif de stockage T1 des données provenant de l'extérieur du réseau local R1. Le dispositif de stockage T1 stocke par exemple les données DN reçues de tiers dans sa zone mémoire P12 **(****figure 1****)**.

Selon un exemple particulier, c'est le dispositif de stockage T1 (ou un terminal quelconque du réseau local R1) qui sélectionne la ou les passerelles voisines que la première passerelle GTW1 utilise en tant que point d'accès lors de l'étape de transfert A8. Dans l'exemple représenté en **figures 1** et **4****,** ce sont les passerelles voisines GTW2 et GTW3 qui ont été sélectionnées. En variante, c'est la première passerelle GTW1 qui effectue cette sélection, par exemple avant d'établir les connexions sans fil comme décrit ci-avant dans les étapes de connexion A2, A4. Selon un exemple particulier, la première passerelle GTW1 réalise cette sélection à partir de capacités d'accès transmises au préalable par les passerelles voisines GTW2-GTW4, ces capacités d'accès étant représentatives de la capacité de chacune des passerelles voisines GTW2-GTW4 à communiquer avec le réseau de communication NT1. Ces capacités d'accès sont par exemple reçues par la première passerelle GTW1 via les connexions sans fil W2-W4 **(****figure 1**). A partir de ces capacités d'accès, la première passerelle GTW1 peut déterminer la ou les passerelles voisines les plus appropriées pour servir de point d'accès au réseau de communication NT1 lors de l'étape de transfert A8. Pour ce faire, ces capacités d'accès comportent par exemple l'un au moins des paramètres suivants :
- un débit de transfert maximal ;
- un débit de transfert effectif ;
- une latence de transfert ; et
- un type de connexion.

Ces paramètres peuvent caractériser par exemple la bande passante disponible (par exemple la bande-passante en communication montante) d'une connexion entre la passerelle concernée et le réseau NT1.

La première passerelle GTW1 peut ainsi vérifier les capacités d'accès des autres passerelles situées dans son voisinage afin d'adapter les canaux de communication utilisés pour transférer des données DT.

Un homme du métier comprendra que les modes de réalisation et variantes décrits ci-avant ne constituent que des exemples non limitatifs de mise en oeuvre de l'invention.

## Revendications

1. Procédé de communication mis en oeuvre par une première passerelle de communication (GTW1) configurée pour faire l'interface entre un dispositif de stockage local situé dans un premier réseau local (R1) et un réseau de communication (NT1), le procédé comprenant les étapes suivantes :
- réception d'une pluralité de paquets de données depuis ledit dispositif de stockage local dans lequel ladite pluralité de paquets de données est stockée ;
- transfert, par l'intermédiaire du réseau de communication (NT1), de la pluralité de paquets de données vers une pluralité de dispositifs de stockage distants (T5-T7), de sorte que chaque paquet de données soit sauvegardé séparément par l'un desdits dispositifs de stockage distants, chaque dispositif de stockage distant étant accessible au travers d'une passerelle de communication distante (GTW5-GTW7) faisant l'interface entre un réseau local distant, comprenant ledit dispositif de stockage distant, et le réseau de communication (NT1) ;
le procédé comprenant l'étape suivante :
- établissement d'une connexion sans fil entre la première passerelle de communication (GTW1) agissant en tant que client et une passerelle de communication voisine (GTW2) agissant en tant que point d'accès de la première passerelle de communication (GTW1) au réseau de communication (NT1) ;
dans lequel, lors de l'étape de transfert, au moins un premier paquet de données, parmi ladite pluralité de paquets de données, est transféré à un premier dispositif de stockage distant (T5, T7) via la connexion sans fil.

2. Procédé selon la revendication 1, dans lequel la connexion sans fil (W2) est établie hors du réseau de communication (NT1).

3. Procédé selon la revendication 1 ou 2, dans lequel la passerelle de communication voisine (GTW2) fait l'interface entre le réseau de communication (NT1) et un réseau local voisin (R2).

4. Procédé selon l'une quelconque des revendications 1 à 3 dans lequel, lors de l'étape d'établissement d'une connexion sans fil, la première passerelle de communication (GTW1) envoie une requête d'accès (RQ1) à la passerelle de communication voisine (GTW2) pour établir ladite connexion sans fil.

5. Procédé selon l'une quelconque des revendications 1 à 4, comprenant les étapes suivantes :
- obtention des capacités d'accès (CP2-CP4) au réseau de communication (NT1) d'au moins une passerelle de communication prédéterminée (GTW2-GTW4) ; et
- sélection, en fonction des capacités d'accès, de ladite passerelle de communication voisine (GTW2) parmi ladite au moins une passerelle de communication prédéterminée (GTW2-GTW4).

6. Procédé selon l'une quelconque des revendications 1 à 5, dans lequel la connexion sans fil est de type Wifi.

7. Procédé selon l'une quelconque des revendications 1 à 6, dans lequel :
- la première passerelle de communication (GTW1) établit une communication sans fil avec une pluralité de passerelles de communication voisines (GTW2, GTW3) pour établir une dite connexion sans fil entre la première passerelle de communication (GTW1) agissant en tant que client et chaque passerelle de communication voisine (GTW2, GTW3) agissant pour la première passerelle de communication (GTW1) en tant que point d'accès au réseau de communication (NT1) ; et
- lors de ladite étape de transfert, la première passerelle de communication (GTW1) transfert au moins une partie de la pluralité de paquets de données à des dispositifs de stockage distants via les connexions sans fil établies avec la pluralité de passerelles de communication voisines.

8. Procédé de communication mis en oeuvre par une passerelle de communication (GTW2), dite passerelle de communication voisine, configurée pour faire l'interface entre un réseau local (R2) et un réseau de communication (NT1), comprenant les étapes suivantes :
- établissement d'une connexion sans fil (W2) entre une première passerelle de communication (GTW1) agissant en tant que client et la passerelle de communication voisine (GTW2) agissant en tant que point d'accès de la première passerelle de communication au réseau de communication (NT1) ;
- réception, en provenance de la première passerelle de communication via la connexion sans fil, d'un paquet de données stocké dans un dispositif de stockage local (T1) situé dans un réseau local (R1), dit premier réseau local, de la première passerelle de communication (GTW1) ; et
- transfert du paquet de données à un dispositif de stockage distant via le réseau de communication (NT1).

9. Procédé selon la revendication 8, dans lequel la connexion sans fil (W2) est établie hors du réseau de communication (NT1).

10. Procédé selon la revendication 7 ou 8, dans lequel la première passerelle de communication (GTW1) fait l'interface entre le réseau de communication (NT1) et le premier réseau local (R1) dans lequel se situe le dispositif de stockage local (T1).

11. Procédé selon l'une quelconque des revendications 8 à 10, comprenant une étape d'envoi, à la première passerelle de communication (GTW1), de capacités d'accès (CP1-CP4) de ladite passerelle de communication voisine (GTW2) à un réseau de communication (NT1).

12. Programme d'ordinateur (PG1 ; PG2) comportant des instructions pour l'exécution des étapes d'un procédé selon l'une quelconque des revendications 1 à 11 lorsque ledit programme est exécuté par un ordinateur.

13. Support d'enregistrement (4 ; 22) lisible par un ordinateur sur lequel est enregistré un programme d'ordinateur (PG1 ; PG2) comprenant des instructions pour l'exécution des étapes d'un procédé selon l'une quelconque des revendications 1 à 11.

14. Première passerelle de communication (GTW1) configurée pour faire l'interface entre un dispositif de stockage local situé dans un premier réseau local (R1) et un réseau de communication (NT1), comprenant :
- un module de réception (MD2) configuré pour recevoir une pluralité de paquets de données depuis ledit dispositif de stockage local dans lequel ladite pluralité de paquets de données est stockée ;
- un module de transfert (MD4) configuré pour transférer, par l'intermédiaire du réseau de communication (NT1), la pluralité de paquets de données vers une pluralité de dispositifs de stockage distants de sorte que chaque paquet de données soit sauvegardé séparément par l'un desdits dispositifs de stockage distants, chaque dispositif de stockage distant étant accessible au travers d'une passerelle de communication distante (GTW5-GTW7) faisant l'interface entre un réseau local distant, comprenant ledit dispositif de stockage distant, et le réseau de communication (NT1) ;
la première passerelle de communication comprenant :
- un module de connexion (MD6) configuré pour établir une connexion sans fil entre la première passerelle de communication (GTW1) agissant en tant que client et une passerelle de communication voisine (GTW2) agissant en tant que point d'accès de la première passerelle de communication (GTW1) au réseau de communication (NT1) ;
dans lequel le module de transfert (MD4) est configuré pour qu'au moins un premier paquet de données, parmi ladite pluralité de paquets de données, soit transféré à un premier dispositif de stockage distant via la connexion sans fil.

15. Passerelle de communication (GTW2), dite passerelle de communication voisine, configurée pour faire l'interface entre un réseau local (R2) et un réseau de communication (NT1), comprenant :
- un module de connexion (MD20) configuré pour établir une connexion sans fil entre une première passerelle de communication (GTW1) agissant en tant que client et la passerelle de communication voisine (GTW2) agissant en tant que point d'accès de la première passerelle de communication au réseau de communication (NT1) ;
- un module de réception (MD22) configuré pour recevoir, en provenance de la première passerelle de communication via la connexion sans fil, un paquet de données stockés dans un dispositif de stockage local (T1) situé dans un réseau local, dit premier réseau local, de la première passerelle de communication (GTW1) ; et
- un module de transfert (MD24) configuré pour transférer le paquet de données à un dispositif de stockage distant via le réseau de communication (NT1).

## Patentansprüche

1. Kommunikationsverfahren, das durch ein erstes Kommunikations-Gateway (GTW1) durchgeführt wird, das dazu ausgestaltet ist, als Schnittstelle zwischen einer lokalen Speichervorrichtung, die sich in einem ersten lokalen Netzwerk (R1) befindet, und einem Kommunikationsnetzwerk (NT1) zu fungieren, wobei das Verfahren die folgenden Schritte umfasst:
- Empfang mehrerer Datenpakete von der lokalen Speichervorrichtung, in der die mehreren Datenpakete gespeichert sind,
- Übertragung, mittels des Kommunikationsnetzwerks (NT1), der mehreren Datenpakete an mehrere entfernte Speichervorrichtungen (T5 bis T7), derart dass jedes Datenpaket durch eine der entfernten Speichervorrichtungen getrennt gespeichert wird, wobei auf jede entfernte Speichervorrichtung über ein entferntes Kommunikations-Gateway (GTW5 bis GTW7) zugegriffen werden kann, das als Schnittstelle zwischen einem entfernten lokalen Netzwerk, das die entfernte Speichervorrichtung umfasst, und dem Kommunikationsnetzwerk (NT1) fungiert, wobei das Verfahren den folgenden Schritt umfasst:
- Herstellung einer drahtlosen Verbindung zwischen dem ersten Kommunikations-Gateway (GTW1), das als Client agiert, und einem benachbarten Kommunikations-Gateway (GTW2), das als Zugriffspunkt des ersten Kommunikations-Gateways (GTW1) auf das Kommunikationsnetzwerk (NT1) agiert,
wobei bei dem Übertragungsschritt mindestens ein erstes Datenpaket von den mehreren Datenpaketen über die drahtlose Verbindung an eine erste entfernte Speichervorrichtung (T5, T7) übertragen wird.

2. Verfahren nach Anspruch 1, wobei die drahtlose Verbindung (W2) außerhalb des Kommunikationsnetzwerks (NT1) hergestellt wird.

3. Verfahren nach Anspruch 1 oder 2, wobei das benachbarte Kommunikations-Gateway (GTW2) als Schnittstelle zwischen dem Kommunikationsnetzwerk (NT1) und einem benachbarten lokalen Netzwerk (R2) fungiert.

4. Verfahren nach einem der Ansprüche 1 bis 3, wobei bei dem Schritt der Herstellung einer drahtlosen Verbindung das erste Kommunikations-Gateway (GTW1) eine Zugriffsanforderung (RQ1) an das benachbarte Kommunikations-Gateway (GTW2) sendet, um die drahtlose Verbindung herzustellen.

5. Verfahren nach einem der Ansprüche 1 bis 4, das die folgenden Schritte umfasst:
- Erhalten von Zugriffskapazitäten (CP2 bis CP4) auf das Kommunikationsnetzwerk (NT1) von mindestens einem vorbestimmten Kommunikations-Gateway (GTW2 bis GTW4), und
- Auswahl, in Abhängigkeit von den Zugriffskapazitäten, des benachbarten Kommunikations-Gateways (GTW2) unter dem mindestens einen vorbestimmten Kommunikations-Gateway (GTW2 bis GTW4).

6. Verfahren nach einem der Ansprüche 1 bis 5, wobei die drahtlose Verbindung vom Typ Wifi ist.

7. Verfahren nach einem der Ansprüche 1 bis 6, wobei:
- das erste Kommunikations-Gateway (GTW1) eine drahtlose Kommunikation mit mehreren benachbarten Kommunikations-Gateways (GTW2, GTW3) herstellt, um eine drahtlose Verbindung zwischen dem ersten Kommunikations-Gateway (GTW1), das als Client agiert, und jedem benachbarten Kommunikations-Gateway (GTW2, GTW3) herzustellen, das für das erste Kommunikations-Gateway (GTW1) als Zugriffspunkt auf das Kommunikationsnetzwerk (NT1) agiert, und
- bei dem Übertragungsschritt das erste Kommunikations-Gateway (GTW1) mindestens einen Teil der mehreren Datenpakete über die mit den mehreren benachbarten Kommunikations-Gateways hergestellten drahtlosen Verbindungen an entfernte Speichervorrichtungen überträgt.

8. Kommunikationsverfahren, das durch ein Kommunikations-Gateway (GTW2), benachbartes Kommunikations-Gateway genannt, durchgeführt wird, das dazu ausgestaltet ist, als Schnittstelle zwischen einem lokalen Netzwerk (R2) und einem Kommunikationsnetzwerk (NT1) zu fungieren, umfassend die folgenden Schritte:
- Herstellung einer drahtlosen Verbindung (W2) zwischen einem ersten Kommunikations-Gateway (GTW1), das als Client agiert, und dem benachbarten Kommunikations-Gateway (GTW2), das als Zugriffspunkt des ersten Kommunikations-Gateways auf das Kommunikationsnetzwerk (NT1) agiert,
- Empfang, von dem ersten Kommunikations-Gateway über die drahtlose Verbindung, eines Datenpakets, das in einer lokalen Speichervorrichtung (T1) gespeichert ist, die sich in einem lokalen Netzwerk (R1), erstes lokales Netzwerk genannt, befindet, von dem ersten Kommunikations-Gateway (GTW1), und
- Übertragung des Datenpakets über das Kommunikationsnetzwerk (NT1) an eine entfernte Speichervorrichtung.

9. Verfahren nach Anspruch 8, wobei die drahtlose Verbindung (W2) außerhalb des Kommunikationsnetzwerks (NT1) hergestellt wird.

10. Verfahren nach Anspruch 7 oder 8, wobei das erste Kommunikations-Gateway (GTW1) als Schnittstelle zwischen dem Kommunikationsnetzwerk (NT1) und dem ersten lokalen Netzwerk (R1) fungiert, in dem sich die lokale Speichervorrichtung (T1) befindet.

11. Verfahren nach einem der Ansprüche 8 bis 10, das einen Schritt zur Sendung von Zugriffskapazitäten (CP1 bis CP4) des benachbarten Kommunikations-Gateways (GTW2) auf ein Kommunikationsnetzwerk (NT1) an das erste Kommunikations-Gateway (GTW1) umfasst.

12. Computerprogramm (PG1; PG2), das Anweisungen zur Ausführung der Schritte eines Verfahrens nach einem der Ansprüche 1 bis 11, wenn das Programm durch einen Computer ausgeführt wird, beinhaltet.

13. Maschinenlesbares Aufzeichnungsmedium (4; 22), auf dem ein Computerprogramm (PG1; PG2) aufgezeichnet ist, das Anweisungen zur Ausführung der Schritte eines Verfahrens nach einem der Ansprüche 1 bis 11 umfasst.

14. Erstes Kommunikations-Gateway (GTW1), das dazu ausgestaltet ist, als Schnittstelle zwischen einer lokalen Speichervorrichtung, die sich in einem ersten lokalen Netzwerk (R1) befindet, und einem Kommunikationsnetzwerk (NT1) zu fungieren, umfassend:
- ein Empfangsmodul (MD2), das dazu ausgestaltet ist, mehrere Datenpakete von der lokalen Speichervorrichtung zu empfangen, in der die mehreren Datenpakete gespeichert sind,
- ein Übertragungsmodul (MD4), das dazu ausgestaltet ist, über das Kommunikationsnetzwerk (NT1) die mehreren Datenpakete an mehrere entfernte Speichervorrichtungen zu übertragen, derart dass jedes Datenpaket von einer der entfernten Speichervorrichtungen getrennt gespeichert wird, wobei auf jede entfernte Speichervorrichtung über ein entferntes Kommunikations-Gateway (GTW5 bis GTW7) zugegriffen werden kann, das als Schnittstelle zwischen einem entfernten lokalen Netzwerk, das die entfernte Speichervorrichtung umfasst, und dem Kommunikationsnetzwerk (NT1) fungiert,
wobei das erste Kommunikations-Gateway umfasst:
- ein Verbindungsmodul (MD6), das dazu ausgestaltet ist, eine drahtlose Verbindung zwischen dem ersten Kommunikations-Gateway (GTW1), das als Client agiert, und einem benachbarten Kommunikations-Gateway (GTW2) herzustellen, das als Zugriffspunkt des ersten Kommunikations-Gateways (GTW1) auf das Kommunikationsnetzwerk (NT1) agiert,
wobei das Übertragungsmodul (MD4) derart ausgestaltet ist, dass mindestens ein erstes Datenpaket von den mehreren Datenpaketen über die drahtlose Verbindung an eine erste Speichervorrichtung übertragen wird.

15. Kommunikations-Gateway (GTW2), benachbartes Kommunikations-Gateway genannt, das dazu ausgestaltet ist, als Schnittstelle zwischen einem lokalen Netzwerk (R2) und einem Kommunikationsnetzwerk (NT1) zu fungieren, umfassend:
- ein Verbindungsmodul (MD20), das dazu ausgestaltet ist, eine drahtlose Verbindung zwischen einem ersten Kommunikations-Gateway (GTW1), das als Client agiert, und dem benachbarten Kommunikations-Gateway (GTW2) herzustellen, das als Zugriffspunkt des ersten Kommunikations-Gateways auf das KommunikationsNetzwerk (NT1) agiert,
- ein Empfangsmodul (MD22), das dazu ausgestaltet ist, von dem ersten Kommunikations-Gateway über die drahtlose Verbindung ein Paket von Daten, die in einer lokalen Speichervorrichtung (T1) gespeichert sind, die sich in einem lokalen Netzwerk, erstes lokales Netzwerk genannt, befindet, von dem ersten Kommunikations-Gateway (GTW1) zu empfangen, und
- ein Übertragungsmodul (MD24), das dazu ausgestaltet ist, das Datenpaket über das Kommunikationsnetzwerk (NT1) an eine entfernte Speichervorrichtung zu übertragen.

## Claims

1. A communication method implemented by a first communication gateway (GTW1) configured to interface between a local storage device located in a first local area network (R1) and a communication network (NT1), the method comprising the following steps:
- receiving a plurality of data packets from said local storage device in which said plurality of data packets is stored;
- transferring, via the communication network (NT1), the plurality of data packets to a plurality of remote storage devices (T5-T7), so that each data packet is backed up separately by one of said remote storage devices, each remote storage device being accessible through a remote communication gateway (GTW5-GTW7) interfacing between a remote local area network, comprising said remote storage device, and the communication network (NT1);
the method comprising the following step:
- establishing a wireless connection between the first communication gateway (GTW1) acting as a client and a neighboring communication gateway (GTW2) acting as an access point of the first communication gateway (GTW1) to the communication network (NT1);
wherein, during the transfer step, at least a first data packet, among said plurality of data packets, is transferred to a first remote storage device (T5, T7) via the wireless connection.

2. The method according to claim 1, wherein the wireless connection (W2) is established outside the communication network (NT1).

3. The method according to claim 1 or 2, wherein the neighboring communication gateway (GTW2) interfaces between the communication network (NT1) and a neighboring local area network (R2).

4. The method according to any one of claims 1 to 3 wherein, during the step of establishing a wireless connection, the first communication gateway (GTW1) sends an access request (RQ1) to the neighboring communication gateway (GTW2) to establish said wireless connection.

5. The method according to any one of claims 1 to 4, comprising the following steps:
- obtaining the communication network (NT1) access capabilities (CP2-CP4) of at least one predetermined communication gateway (GTW2-GTW4); and
- selecting, depending on the access capabilities, said neighboring communication gateway (GTW2) among said at least one predetermined communication gateway (GTW2-GTW4).

6. The method according to any one of claims 1 to 5, wherein the wireless connection is of the Wi-Fi type.

7. The method according to any one of claims 1 to 6, wherein:
- the first communication gateway (GTW1) establishes wireless communication with a plurality of neighboring communication gateways (GTW2, GTW3) to establish a said wireless connection between the first communication gateway (GTW1) acting as a client and each neighboring communication gateway (GTW2, GTW3) acting for the first communication gateway (GTW1) as an access point to the communication network (NT1); and
- during said transfer step, the first communication gateway (GTW1) transfers at least part of the plurality of data packets to remote storage devices via the wireless connections established with the plurality of neighboring communication gateways.

8. A communication method implemented by a communication gateway (GTW2), called neighboring communication gateway, configured to interface between a local area network (R2) and a communication network (NT1), comprising the following steps:
- establishing a wireless connection (W2) between a first communication gateway (GTW1) acting as a client and the neighboring communication gateway (GTW2) acting as an access point of the first communication gateway to the network communication (NT1);
- receiving, from the first communication gateway via the wireless connection, a data packet stored in a local storage device (T1) located in a local area network (R1), called first local area network, of the first communication gateway (GTW1); and
- transferring the data packet to a remote storage device via the communication network (NT1).

9. The method according to claim 8, wherein the wireless connection (W2) is established outside the communication network (NT1).

10. The method according to claim 7 or 8, wherein the first communication gateway (GTW1) interfaces between the communication network (NT1) and the first local area network (R1) in which the local storage device (T1) is located.

11. The method according to any one of claims 8 to 10, comprising a step of sending, to the first communication gateway (GTW1), access capabilities (CP1-CP4) of said neighboring communication gateway (GTW2) to a communication network (NT1).

12. A computer program (PG1; PG2) including instructions for executing the steps of a method according to any one of claims 1 to 11 when said program is executed by a computer.

13. A recording medium (4; 22) readable by a computer on which a computer program (PG1; PG2) is recorded, comprising instructions for executing the steps of a method according to any one of claims 1 to 11.

14. A first communication gateway (GTW1) configured to interface between a local storage device located in a first local area network (R1) and a communication network (NT1), comprising:
- a receiving module (MD2) configured to receive a plurality of data packets from said local storage device in which said plurality of data packets is stored;
- a transfer module (MD4) configured to transfer, via the communication network (NT1), the plurality of data packets to a plurality of remote storage devices so that each data packet is backed up separately by one of said remote storage devices, each remote storage device being accessible through a remote communication gateway (GTW5-GTW7) interfacing between a remote local area network, comprising said remote storage device, and the communication network (NT1);
the first communication gateway comprising:
- a connection module (MD6) configured to establish a wireless connection between the first communication gateway (GTW1) acting as a client and a neighboring communication gateway (GTW2) acting as an access point of the first communication gateway communication (GTW1) to the communication network (NT1);
wherein the transfer module (MD4) is configured so that at least a first data packet, among said plurality of data packets, is transferred to a first remote storage device via the wireless connection.

15. A communication gateway (GTW2), called "neighboring communication gateway", configured to interface between a local area network (R2) and a communication network (NT1), comprising:
- a connection module (MD20) configured to establish a wireless connection between a first communication gateway (GTW1) acting as a client and the neighboring communication gateway (GTW2) acting as an access point of the first communication gateway to the communication network (NT1);
- a receiving module (MD22) configured to receive, from the first communication gateway via the wireless connection, a data packet stored in a local storage device (T1) located in a local area network, called first local area network, of the first communication gateway (GTW1); and
a transfer module (MD24) configured to transfer the data packet to a remote storage device via the communication network (NT1).
